# EUROPÄISCHE PATENTSCHRIFT

(11) **EP 1 140 594 B1**
(45) Veröffentlichungstag und Bekanntmachung des Hinweises auf die Patenterteilung: **03.05.2006**
(21) Anmeldenummer: 00984831.8
(22) Anmeldetag: 14.10.2000
(51) Int. Cl.: B60S 1/52, B05B 1/30

(54) **DÜSENANORDNUNG ZUR ZUFÜHRUNG EINER FLÜSSIGKEIT AUF EIN ZIEL, ZUM BEISPIEL EINE SCHEIBE EINES FAHRZEUGS**
NOZZLE ASSEMBLY FOR FEEDING A LIQUID TO A DESTINATION, FOR EXAMPLE, TO A DISC OF A MOTOR VEHICLE
SYSTEME DE BUSE POUR L'AMENEE D'UN LIQUIDE A UNE DESTINATION, PAR EXEMPLE A UN DISQUE D'UN VEHICULE AUTOMOBILE

(30) Priorität: 21.10.1999 DE 19950738
(43) Veröffentlichungstag der Anmeldung: 10.10.2001
(73) Patentinhaber: ROBERT BOSCH GMBH, 70442 Stuttgart (DE)
(72) Erfinder: SCHAECK, Martin, 77815 Buehl (DE)
(74) Vertreter: Grosse, Rainer
(86) Internationale Anmeldenummer: PCT/DE2000/003625
(87) Internationale Veröffentlichungsnummer: WO 2001/028829

(56) Entgegenhaltungen:
- EP-A- 0 908 651
- WO-A-00/48878
- US-A- 5 314 116
- US-A- 5 727 733
- US-A- 5 765 581

## Beschreibung

Die Erfindung betrifft eine Zuführvorrichtung zur Zuführung einer Flüssigkeit auf ein Ziel, zum Beispiel eine Scheibe eines Fahrzeugs, mit einem aufgrund einer Flüssigkeitsdruckänderung schaltenden Öffnungsmechanismus zur Abgabe der Flüssigkeit auf das Ziel.

### Stand der Technik

Derartige Zuführvorrichtungen, welche einen schaltenden Öffnungsmechanismus zur Abgabe einer Flüssigkeit auf eine Fahrzeugscheibe aufweisen, sind bekannt. Der Öffnungsmechanismus besteht hierbei aus einem mit einer Zuführleitung der Zuführvorrichtung verbindbaren Einsatzstück, welches einen von der Zuführleitung zu einer Abgabedüse führenden Durchlasskanal aufweist, durch welchen die Flüssigkeit zur Abgabe auf eine eventuell mittels einer Wischvorrichtung reinigbaren Scheibe eines Fahrzeugs von der Zuführleitung zur Abgabedüse geleitet wird. Die Flüssigkeit gelangt somit aus der Zuführleitung in einen von dieser wegführenden Durchlasskanal, wobei der Durchlasskanal von einem von außen auf das Einsatzstück aufgeschobenen, elastisch durch den bei der Abgabe sich einstellenden Flüssigkeitsdruck entsprechend in radialer Richtung elastisch ausdehnbaren, ringförmigen Schließ- beziehungsweise Öffnungselement in Flussrichtung gesehen vor der Abgabedüse und hinter der Zuführleitung flüssigkeitsdicht versperrt wird. Dieses Schließ- beziehungsweise Öffnungselement hat somit die Funktion eines Rückschlagventils zur Verhinderung eines unerwünschten Austretens von Flüssigkeit aus der Zuführleitung bei nicht aktivierter Zuführvorrichtung, das heißt bei nicht erwünschter Zuführung von Flüssigkeit zur Abgabedüse. Derartig ausgebildete, bekannte Öffnungsmechanismen sind verhältnismäßig kompliziert aufgebaut und erfordern einen relativ hohen Montageaufwand.

Zum Stand der Technik ist die US-A-5,727,733 zu nennen, in der eine Vorrichtung aufgezeigt wird, die einen geringen, kontinuierlichen Volumenstrom in einen hohen, impulsartigen Volumenstrom wandelt. Das Prinzip dieser Vorrichtung liegt darin, dass der niedrige Volumenstrom gegen den Widerstand eines elastischen Schlauchelements langsam einen Druck aufbaut. Bei geringem Druck liegt der Schlauch dicht an einem Rohr an, sodass der Volumenstrom die Vorrichtung nicht passieren kann. Hat sich hingegen ein ausreichend großer Druck aufgebaut, so wird der Schlauch von dem Rohr kurzzeitig abgehoben, und der Volumenstrom schießt impulsartig durch die Vorrichtung. Es handelt sich dabei jedoch um eine sehr komplexe Vorrichtung, die zudem eine Serienschaltung mehrerer Vorrichtungen nicht erlaubt.

### Vorteile der Erfindung

Bei einer Zuführvorrichtung zur Zuführung einer Flüssigkeit auf ein Ziel, zum Beispiel eine Scheibe eines Fahrzeugs, mit einem aufgrund einer Flüssigkeitsdruckänderung schaltenden Öffnungsmechanismus zur Abgabe der Flüssigkeit auf das Ziel, wobei der Öffnungsmechanismus aus einer Leitung und einem innerhalb der Leitung angeordneten Dichtelement besteht, ist efindungsgemäß vorgesehen, dass die Leitung eine Zuführleitung der Zuführvorrichtung ist und dass das Dichtelement eine zwei voneinander getrennte Leitungsabschnitte der Zuführleitung verbindende Durchgangsöffnung aufweist. Die Erfindung bringt gegenüber dem Stand der Technik den Vorteil, dass auf einfache Weise mehrere Flüssigkeitsspender hintereinander in Reihe geschaltet werden können. Außerdem lässt sich der Aufbau der Vorrichtung vereinfachen, da die Zuführleitung selber im Zusammenspiel mit dem Dichtelement das gezielte Austreten von Flüssigkeit aus dem Flüssigkeitsspender bewirkt. Außerdem bietet die aufgezeigte Vorrichtung auch noch folgende Vorteile:

Durch die Anordnung eines Dichtelements innerhalb der Zuführleitung ergibt sich ein Öffnungsmechanismus, welcher besonders kompakt und montagefreundlich ausgebildet ist. Die Verwendung eines entsprechend ausgebildeten Endabschnitts der Zuführleitung als Komponente des Öffnungsmechanismus und die Anordnung des Dichtelements als zweite Komponente des Öffnungsmechanismus im Innern des Endabschnitts der Zuführleitung erlaubt eine sowohl in axialer als auch radialer Richtung kompakte Ausgestaltung der Zuführvorrichtung, wobei selbige in verhältnismäßig einfacher Weise montierbar ist. Das Dichtelement kann vorteilhafterweise derart ausgebildet sein, dass der Schließ- beziehungsweise Öffnungsmechanismus vollständig im Innern des Endabschnitts der Zuführleitung angeordnet ist, während die Abgabe der Flüssigkeit auf die Scheibe beispielsweise mittels einer in Bezug auf den Endabschnitt der Zuführleitung radial und axial beabstandeten, mit der Zuführleitung in Verbindung stehenden Düse erfolgen kann. Die Zuführvorrichtung kann somit auch in Bezug auf die Abgabeeinheit der Flüssigkeit in kompakter Weise ausgebildet sein. Ferner wird vorteilhafterweise die Zahl der zu montierenden Bauteilelemente reduziert, so dass die Montage der Zuführvorrichtung in verhältnismäßig einfacher und schneller Weise erfolgen kann. Da der Druck der Flüssigkeit in der Zuführleitung lediglich bei der Abgabe der Flüssigkeit auf das Ziel erhöht wird, bietet sich die Druckänderung der Flüssigkeit in der Zuführleitung in besonders vorteilhafter Weise als Schaltungsvariable für den Öffnungsmechanismus an. In dieser Weise wird gewährleistet, dass lediglich bei einer Druckänderung der Flüssigkeit in der Zuführleitung und somit unmittelbar nach einer entsprechenden Vorbereitung der Abgabe der Flüssigkeit auf das Ziel eine elastische Verformung der Zuführleitung und/oder des Dichtelements und somit ein freier Durchlass für die von der Zuführleitung zu einer Abgabeöffnung beziehungsweise Düse zu fördernde Flüssigkeit hergestellt wird.

Gemäß einer vorteilhaften Ausführungsform erfolgt die Schaltung des Öffnungsmechanismus mittels einer elastischen Verformung der Zuführleitung und/oder des Dichtelements. Da die Zuführleitung beziehungsweise wenigstens ein Teil derselben vorzugsweise aus elastisch verformbarem Material hergestellt ist, kann deren elastische Verformung in Abhängigkeit des bei Abgabe der Flüssigkeit sich einstellenden Drucks in der Zuführleitung zur Herstellung einer einfachen, schnellen und zuverlässigen Schaltung des Öffnungsmechanismus genutzt werden. Dabei wird durch die elastische Verformung der Zuführleitung unter Ausbildung einer Flüssigkeitsdurchtrittsöffnung eine Verbindung zwischen der Zuführleitung und einer die Flüssigkeit auf die Scheibe abgebenden Öffnung beziehungsweise Düse geschaffen. Eine derartige Verbindung läßt sich in alternativer Weise auch durch eine entsprechende elastische Verformung des Dichtelements alleine beziehungsweise des Dichtelements zusammen mit der Zuführleitung herstellen.

Mit Vorteil erfolgt bei Erreichen eines Mindestdrucks der Flüssigkeit in der Zuführleitung eine elastische, radiale Erweiterung der Zuführleitung unter Ausbildung einer Durchlassöffnung. Aus montagetechnischen Gründen bietet es sich an, den Öffnungsmechanismus aus einer elastisch verformbaren Zuführleitung und einem verhältnismäßig steifen Dichtelement zu realisieren. Dabei erfolgt die elastische Verformung der Zuführleitung in Form einer radialen Erweiterung zur Ausbildung einer Durchlassöffnung, durch welche die Flüssigkeit von der Zuführleitung kommend und unter Betriebsdruck stehend zur Abgabeöffnung beziehungsweise Düse geleitet wird. Die unter einem erhöhten Druck, welcher gleich beziehungsweise größer als ein festgelegter Mindestdruck sein muß, stehende Flüssigkeit verursacht somit die erwünschte radiale Erweiterung der elastisch verformbaren Zuführleitung zur Herstellung einer Durchlassöffnung und wird unter diesem erhöhten Druck durch die Abgabeöffnung beziehungsweise Düse in Richtung Ziel abgegeben.

Vorzugsweise erstreckt sich die Durchlassöffnung umfangsförmig zwischen dem Dichtelement und der Zuführleitung. Bei einer umfangsförmig ausgebildeten Durchlassöffnung werden die Zuführleitung und das Dichtelement gleichmäßig entlang ihres Umfangs druckmäßig beansprucht. Durch die Herstellung einer in Umfangsrichtung gleichmäßigen, elastischen Erweiterung wird die Gefahr einer nicht erwünschten, lokalen Materialschädigung insbesondere des elastisch verformbaren Elements (Zuführleitung) reduziert. Ferner ist es möglich, dass bei einer umfangsförmigen Erweiterung der Zuführleitung unter Ausbildung einer umfangsförmigen Durchlassöffnung um das Dichtelement herum eine größere Menge an Flüssigkeit zur entsprechend ausgebildeten beziehungsweise ausbildbaren Abgabeöffnung beziehungsweise Düse und somit auch auf das Ziel befördert werden kann.

Gemäß einer bevorzugten Ausführungsform weist das Dichtelement einen sich von der Durchlassöffnung zu einer Düse erstreckenden Durchlasskanal auf. Mittels eines sich von der Durchlassöffnung zu einer zur Abgabe der Flüssigkeit auf das Ziel vorgesehenen Düse erstreckenden Durchlasskanals ist es in besonders einfacher Weise möglich, die Düse unabhängig von der Durchlassöffnung in Bezug auf die Abgaberichtung der Flüssigkeit auf das Ziel und unter entsprechender Ausbildung des Durchlasskanals in einer optimalen Abgabeposition anzuordnen. Dabei ist ein Durchlasskanal in einem Aufnahmekörper, welcher sich vom Dichtelement bis zur Düse erstreckt, in fertigungstechnisch einfacher Weise realisierbar.

Gemäß einer vorteilhaften Ausführungsform enthält das Dichtelement einen eine Dichtkante aufweisenden, ringförmigen Vorsprung. Ein Dichtelement mit einem ringförmigen Vorsprung, der eine Dichtkante aufweist, ist besonders geeignet, die Zuführung von Flüssigkeit von der Zuführleitung zur Düse flüssigkeitsdicht zu unterbrechen, indem die Dichtkante umfangsförmig mit der entsprechenden Innenfläche der Zuführleitung in Berührungskontakt kommt. Da die Zuführleitung vorzugsweise aus elastisch verformbarem Material besteht, kann der Durchmesser der Dichtkante geringfügig größer als der Innendurchmesser der Zuführleitung sein, um eine leichte Preßverbindung zwischen Dichtkante und Zuführleitung herzustellen und somit eine flüssigkeitsdichte Unterbrechung der Zuführung der Flüssigkeit zur Düse zu erhalten, wenn die Flüssigkeit unter einem Druck steht, der kleiner als der Mindestdruck ist.

Vorzugsweise weist der Vorsprung stirnseitig eine sich in Richtung der Durchlassöffnung radial erweiternde und mit dem gegenüberliegenden Abschnitt der Zuführleitung einen im Querschnitt keilförmigen Spalt bildende Abschrägung auf. Durch eine derartig ausgebildete, stirnseitige Abschrägung des Vorsprungs wird zwischen der Zuführleitung und dem Vorsprung ein sich in Richtung Durchlassöffnung verjüngender, keilförmiger Spalt geschaffen. Hierdurch wird ein Druckaufbau begünstigender, ringförmiger Zwischenraum zwischen dem Vorsprung und der diesen umfangsförmig umgebenden Wandung der Zuführleitung erhalten. Ferner stellt sich durch den in Form eines keilförmigen Spalts vorliegenden Zwischenraum nach Ausbildung einer Durchlassöffnung in Folge einer entsprechenden Druckerhöhung der Flüssigkeit ein eingangsseiter, die Zuführung der Flüssigkeit begünstigender Eintrittstrichter ein. Der stirnseitig vorgesehene keilförmige Spalt zwischen Vorsprung und Zuführleitung wirkt sich somit sowohl in Bezug auf den Druckaufbau der Flüssigkeit in der Zuführleitung, und deshalb auch auf die elastische Verformung wenigstens eines Teils derselben, als auch in Bezug auf die Zuführung der Flüssigkeit zur Düse vorteilhaft aus.

Mit Vorteil ist die Dichtkante als im Querschnitt spitze Kante ausgebildet und weist das Dichtelement in Durchlassrichtung der Flüssigkeit durch die Durchlassöffnung hinter der Dichtkante eine zusammen mit dem gegenüberliegenden Abschnitt der Zuführleitung einen Durchlasshohlraum bildende, zum Durchlasskanal führende Hinterschneidung auf. Eine als spitze Kante ausgebildete Dichtkante ist in besonders einfacher Weise fertigungstechnisch herstellbar und gewährleistet eine schnelle und zuverlässige, flüssigkeitsdichte Unterbrechung der Zuführung der Flüssigkeit zur Düse, insbesondere bei Vorliegen einer leichten Preßverbindung zwischen dem ringförmigen Vorsprung und dem entsprechenden Abschnitt der Zuführleitung. Mittels einer in Durchlassrichtung hinter der Dichtkante vorgesehenen Hinterschneidung des Dichtelements läßt sich in besonders einfacher Weise in Verbindung mit der das Dichtelement umfangsförmig umgebenden Zuführleitung ein Durchlasshohlraum realisieren, der sich umfangsförmig um das Dichtelement erstreckt und somit einen geschlossenen Ring zwischen Dichtelement und Zuführleitung bildet. Der ringartig ausgebildete Durchlasshohlraum ist besonders geeignet, nach Ausbildung einer Durchlassöffnung eine kontinuierliche Zuführung der Flüssigkeit zum Durchlasskanal und somit zur Düse zu gewährleisten. Hierbei können gemäß einer alternativen Ausführungsform auch mehrere Durchlasskanäle mit entsprechenden Düsen mit dem ringförmigen Durchlasshohlraum in Verbindung stehen. Dadurch kann beispielsweise ein verbessertes Abgabe- beziehungsweise Aufsprühverhalten der Flüssigkeit auf die Scheibe des Fahrzeugs erhalten werden.

Gemäß einer nicht zur Erfindung gehörenden Ausführungsform ist das Dichtelement als ein die Zuführleitung verschließendes Deckelelement ausgebildet. Um die Zuführleitung möglichst kurz auszubilden, wird selbige mittels eines entsprechend ausgebildeten Dichtelements deckelartig an ihrem freien Ende verschlossen. Dies hat zum Vorteil, dass die Zuführleitung keinen besonders ausgebildeten, einseitig geschlossenen Endabschnitt aufweisen muß. Sämtliche Leitungsabschnitte der Zuführleitung können somit als beidseitig offene Leitungen ausgebildet sein.

Vorzugsweise ist das Dichtelement Teil eines einen Aufnahmekörper aufweisenden Verbindungselements. Das Verbindungselement ist somit in kompakter Weise derart ausgebildet, dass es gleichzeitig sowohl die Funktion eines Dichtelements als auch diejenige eines Aufnahmekörpers erfüllen kann.

Vorteilhafterweise steht der Aufnahmekörper über die Zuführleitung nach außen hinweg vor und weist einen Aufnahmesitz für eine Düse zur Abgabe der Flüssigkeit auf die Scheibe auf. In dieser Weise kann mit einer in Bezug auf die Zuführleitung radial vorstehenden Düse ein verhältnismäßig großer Bereich des Ziels, zum Beispiel eine Scheibe des Fahrzeugs, mit Flüssigkeit unter einem geeigneten Winkel besprüht werden.

Mit Vorteil ist das Verbindungselement aus einem in Bezug auf das Material der Zuführleitung biegesteiferen Material hergestellt. Da das Verbindungselement in Bezug auf die Zuführung der Flüssigkeit eine Dichtfunktion, in Bezug auf die Düse eine Aufnahmefunktion und ferner in Bezug auf die Zuführleitung die Funktion eines Deckels beziehungsweise eines Verbindungsmittels aufweist, wobei das Verbindungselement zusätzlich mit einem zur Düse führenden Durchlasskanal versehen sein muß, ist es besonders vorteilhaft, das Verbindungselement in Bezug auf die Zuführleitung oder wenigstens eines Teils derselben als steifes Bauteil auszubilden.

Gemäß einer bevorzugten Ausführungsform ist die Zuführvorrichtung mit der Wischvorrichtung verbunden. Aufgrund der besonders kompakten Gestaltung der Zuführvorrichtung läßt sich selbige vorteilhafterweise problemlos mit der Wischvorrichtung direkt verbinden zur Schaffung einer montagefreundlichen Baugruppe.

Vorzugsweise ist die Zuführleitung mittels eines ringförmigen Klemmelements verschiebungssicher auf einem Anschlußstutzen des Dichtelements befestigt. Hierdurch wird verhindert, dass sich die Zuführleitung in unbeabsichtigter.Weise vom Dichtelement lösen kann, ohne die elastischen Eigenschaften des Materials der Zuführleitung zu beeinträchtigen. Das ringförmige Klemmelement kann beispielsweise als von außen auf die Zuführleitung aufbringbare Schlauchklemme ausgebildet sein.

Vorteilhafterweise enthält die Zuführleitung wenigstens eine elastisch verformbare Leitung, deren Enden jeweils mit dem Dichtelement von zwei hintereinander beabstandet angeordneten Flüssigkeitssprendern verbunden sind, und eine Verbindungsleitung enthält, die eine Pumpe mit einem Anschlussstutzen ohne Öffnungsmechanismus eines in Flussrichtung ersten Flüssigkeitsspenders verbindet. Gemäß einer derartigen Anordnung ist es möglich, für jeweils zwei Flüssigkeitsspender nur eine einzige, aus einem besonderen Material (elastische Dehnbarkeit in radialer Richtung) hergestellte elastische Leitung vorzusehen, die zwei gegenüberliegende, zueinander beabstandet angeordnete Anschlussstutzen mit einem Öffnungsmechanismus verbindet. Die restlichen Leitungsabschnitte der Zuführleitung können vorteilhafterweise aus einem herkömmlichen beziehungsweise steifen Material hergestellt sein, da sie nicht mit einem Anschlussstutzen mit Öffnungsmechanismus der entsprechenden Flüssigkeitsspender verbunden sind. Es lassen sich somit gemäß dieser Ausführungsform Kosten, insbesondere Materialkosten für die elastische Leitung einsparen.

Weitere vorteilhafte Ausgestaltungen der Erfindung ergeben sich aus der Beschreibung.

### Zeichnungen

Die Erfindung wird nachfolgend in zwei Ausführungsbeispielen anhand zugehöriger Zeichnungen näher erläutert. Es zeigen:
- Figur 1: eine schematische Ansicht einer erfindungsgemäßen Zuführvorrichtung an einer Wischvorrichtung;

- Figur 2: einen schematischen Längsschnitt eines Details eines ersten Ausführungsbeispiels in vergrößertem Maßstab der Zuführvorrichtung gemäß Figur 1 in geschlossener Stellung;
- Figur 3: eine schematische Ansicht der Zuführvorrichtung gemäß Figur 2 in geöffneter Stellung;
- Figur 4: einen schematischen Längsschnitt einer ein Deckelelement aufweisenden Zuführvorrichtung und
- Figur 5: einen schematischen Längsschnitt eines Details eines zweiten Ausführungsbeispiels in vergrößertem Maßstab.

### Beschreibung der Erfindung

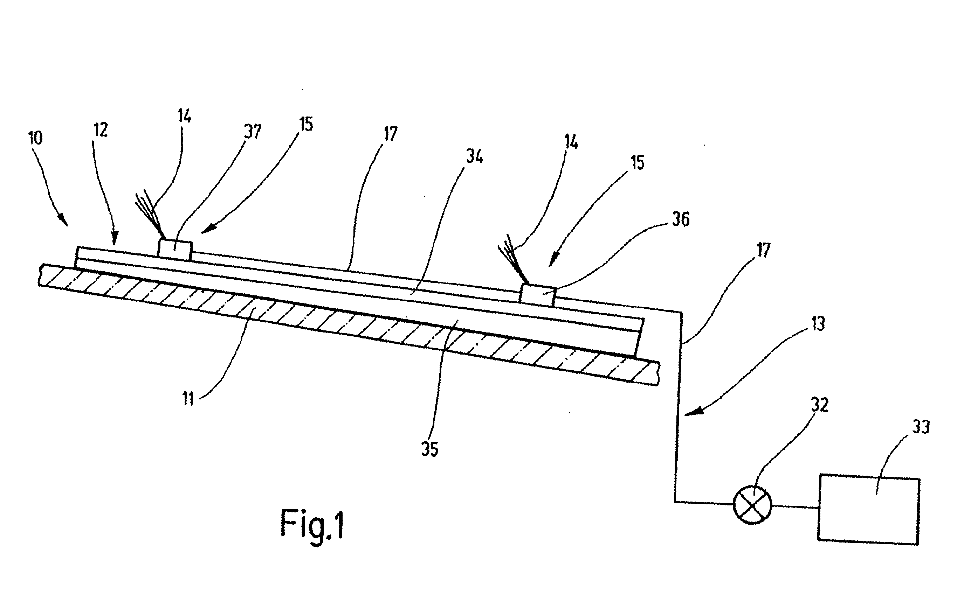

Unter Bezugnahme auf Figur 1 ist eine allgemein mit 13 bezeichnete Zuführvorrichtung dargestellt zur Zuführung einer Flüssigkeit in Form eines Flüssigkeitsstrahls 14 auf eine mittels einer Wischvorrichtung 10 reinigbaren Scheibe 11 eines Fahrzeugs (nicht dargestellt). Die Flüssigkeit wird mittels einer Pumpe 32 von einem Vorratsbehälter 33 durch eine Zuführleitung 17 zu zwei Flüssigkeitsspendern 15 gefördert. Im vorliegenden Fall sind als Flüssigkeitsspender 15 ein Verbindungselement 36 und ein Deckelelement 37 vorgesehen. Der konstruktive Aufbau und die Funktion der beiden Elemente 36, 37 werden später eingehend erörtert. Die Pumpe 32 steht in bekannter Weise mit der Zuführleitung 17 in Wirkverbindung und ist über ein nicht dargestelltes Steuerelement in Betrieb beziehungsweise außer Betrieb setzbar. Die Wischvorrichtung 10 enthält eine Wischgestelleinheit 12, welche ein Wischblatt 34 aufweist, das mittels eines Wischelements 35 mit der Scheibe 11 in Kontakt steht. Der mögliche konstruktive Aufbau der Wischgestelleinheit 12 ist bereits bekannt und wird deshalb hier nicht im Detail beschrieben.

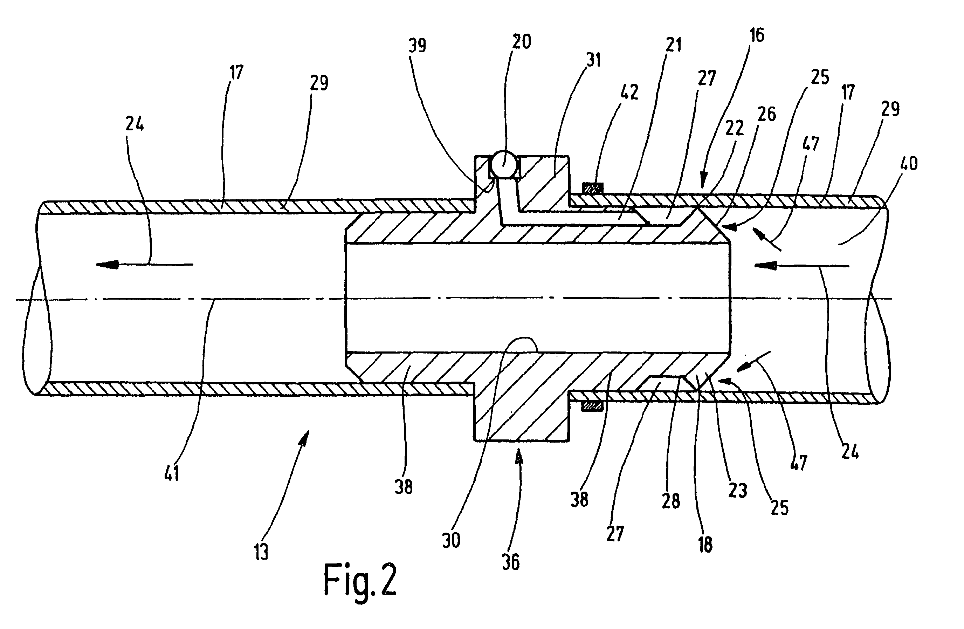

Figur 2 ist eine schematische Detaildarstellung einer ersten Ausführungsform der Zuführvorrichtung 13 der Figur 1, in welcher insbesondere das Verbindungselement 36 gemäß Figur 1 mit einem zur Abgabe der Flüssigkeit auf die Scheibe 11 schaltbaren Öffnungsmechanismus 16 dargestellt ist. Der Öffnungsmechanismus 16 besteht aus einem Endabschnitt der Zuführleitung 17 und einem in diesem Endabschnitt angeordneten Dichtelement 18. Im vorliegenden Beispiel gemäß Figur 2 verbindet das Verbindungselement 36 zwei voneinander getrennte Abschnitte der Zuführleitung 17, das heißt einen ersten, in Bezug auf das Verbindungselement 36 eingangsseitigen und einen zweiten, ausgangsseitigen Abschnitt der Zuführleitung 17. Das Verbindungselement 36 weist zwei Anschlußstutzen 38 auf, auf welche die entsprechenden Endabschnitte der zwei zu verbindenden Abschnitte der Zuführleitung 17 flüssigkeitsdicht aufgeschoben sind. Der eingangsseitige Anschlußstutzen 38 ist Teil des Dichtelements 18. Zwischen den beiden Endabschnitten ragt ein Aufnahmekörper 31 des Verbindungselements 36 radial über die Zuführleitung 17 vorstehend nach außen und ist mit einem für eine Düse 20 vorgesehenen Aufnahmesitz 39 versehen. Eine Durchgangsöffnung 30 des Verbindungselements 36 gewährleistet einen freien Durchfluss der Flüssigkeit (nicht dargestellt) in Flussrichtung 24 von dem ersten, eingangsseitig mit dem Dichtelement 18 verbundenen Leitungsabschnitt in einen zweiten, ausgangsseitig mit dem entsprechenden Anschlußstutzen 38 des Verbindungselements 36 verbundenen Leitungsabschnitt.

Das Dichtelement 18 ist eingangsseitig mit einem eine Dichtkante 22 aufweisenden, ringförmigen Vorsprung 23 versehen. Die Dichtkante 22 ist als im Querschnitt spitze Kante ausgebildet und steht mit der Innenfläche der Wandung der Zuführleitung 17 in flüssigkeitsdichtem Berührungskontakt. Der Vorsprung 23 weist stirnseitig eine sich in Flussrichtung 24 der Flüssigkeit radial erweiternde und mit dem gegenüberliegenden Abschnitt der Zuführleitung 17 einen im Querschnitt keilförmigen Spalt 25 bildende Abschrägung 26 auf.

Das Dichtelement 18 weist ferner in Flussrichtung 24 hinter der Dichtkante 22 eine zusammen mit dem gegenüberliegenden Abschnitt der Zuführleitung 17 einen Durchlasshohlraum .27 bildende Hinterschneidung 28 auf. Sowohl der Vorsprung 23 mit der Dichtkante 22 als auch der Durchlasshohlraum 27 erstrekken sich umfangsförmig im Innenraum 40 der Zuführleitung 17 unter Ausbildung eines entsprechenden, geschlossenen Rings. Vom Durchlasshohlraum 27 ausgehend erstreckt sich ein Durchlasskanal 21 bis zum Aufnahmesitz 39 der Düse 20 im Aufnahmekörper 31 des Verbindungselements 36. Die Leitungsabschnitte der Zuführleitung 17 und das Verbindungselement. 36 sind in Bezug auf eine Längsachse 41 zueinander koaxial angeordnet. Der in Bezug auf das Verbindungselement 36 eingangsseitig befestigte Endabschnitt des Leitungsabschnitts der Zuführleitung 17 ist vorzugsweise zusätzlich durch ein ringförmiges Klemmelement 42 in Form einer Schlauchklemme auf dem entsprechenden Anschlußstutzen 38 verschiebungssicher befestigt. Die Zuführleitung 17 ist zumindest in Bezug auf die mit jeweils einem Dichtelement 18 verbundenen Leitungsabschnitte aus einem elastisch verformbaren Material hergestellt, während das Verbindungselement 36 aus einem biegesteifen Material besteht. Die Zuführleitung 17 ist somit wenigstens teilweise als elastischer Schlauch ausgebildet.

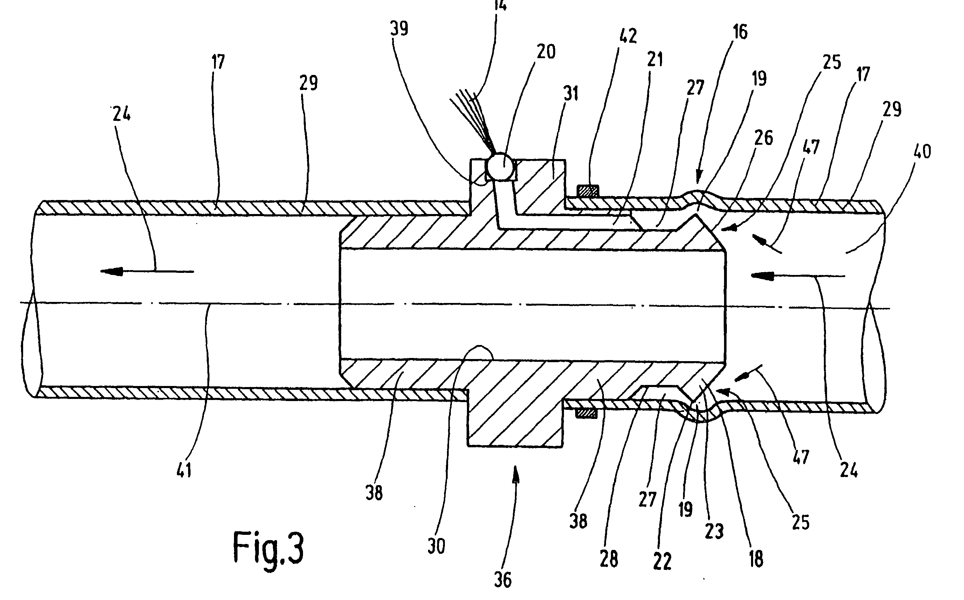

Während in Figur 2 der Öffnungsmechanismus 16 in geschlossener Stellung dargestellt ist, zeigt Figur 3 selbigen in geöffneter Position. Die konstruktive Gestaltung des Öffnungsmechanismus 16 gemäß Figur 3 entspricht derjenigen der Figur 2, so dass bei der Beschreibung der Figur 3 lediglich auf die Unterschiede in Bezug auf Figur 2 eingegangen wird. In Figur 3 ist eine radiale Erweiterung der elastisch verformbaren Zuführleitung 17 unter Ausbildung einer Durchlassöffnung 19 dargestellt. Die Durchlassöffnung 19 erstreckt sich ringförmig um die Längsachse 41 zwischen der Dichtkante 22 und der Innenfläche der Wandung der Zuführleitung 17. Die nach Auslösung eines entsprechenden Signals in Betrieb gesetzte Pumpe 32 erzeugt im Innenraum 40 der Zuführleitung 17 ein Druckniveau der Flüssigkeit, das einen in Bezug auf eine elastische Verformung der Zuführleitung 17 im Bereich des Öffnungsmechanismus 16 erforderlichen Mindestdruck erreicht oder übersteigt. Aufgrund des sich im Spalt 25 einstellenden Druckniveaus der Flüssigkeit wird der ohne Druckbeanspruchung geschlossene Öffnungsmechanismus 16 (siehe Figur 2) aufgrund der sich einstellenden elastischen radialen Erweiterung der Wandung der Zuführleitung 17 im Bereich der Dichtkante 22 des Dichtelements 18 in eine Öffnungsstellung gebracht (siehe Figur 3). In dieser Öffnungsstellung wird ein Teil der im Innenraum 40 der Zuführleitung 17 in Flussrichtung 24 fließenden Flüssigkeit gemäß einer entsprechenden Durchlassrichtung 47 durch den keilförmigen Spalt 25 und die ringförmige Durchlassöffnung 19 in den ringförmigen Durchlasshohlraum 27 geführt, von welchem aus sie durch den Durchlasskanal 21 zur Düse 20 gelangt. Von der Düse 20 aus wird die Flüssigkeit auf einen möglichst großen Abschnitt der Scheibe 11 des Fahrzeugs in Form eines Flüssigkeitsstrahls 14 gesprüht. Sobald nach einem entsprechenden Signal die Pumpe 32 außer Betrieb gesetzt wird, fällt das Druckniveau der Flüssigkeit im Innenraum 40 der Zuführleitung 17 auf Atmosphärendruck herab, so dass sich das elastisch verformbare Material der Zuführleitung 17 beziehungsweise des entsprechenden elastisch erweiterbaren Abschnitts derselben im Bereich der Dichtkante 22 aufgrund der materialspezifischen elastischen Rückstellkräfte wieder die ursprüngliche, zylindrische Gestalt unter Ausbildung eines flüssigkeitsdichten Berührungskontakts mit der Dichtkante 22 selbständig einnimmt. Der Öffnungsmechanismus 16 wirkt somit als selbsttätiges Rückschlagventil der Zuführvorrichtung 13. In dieser Weise wird verhindert, dass nach Außerbetriebsetzung der Pumpe 32 weitere Flüssigkeit aus dem Innenraum 40 der Zuführleitung 17 durch die Düse 20 nach außen gelangt, was zu einer in Bezug auf die Funktion der Zuführvorrichtung 13 nachteiligen Belüftung derselben führen würde.

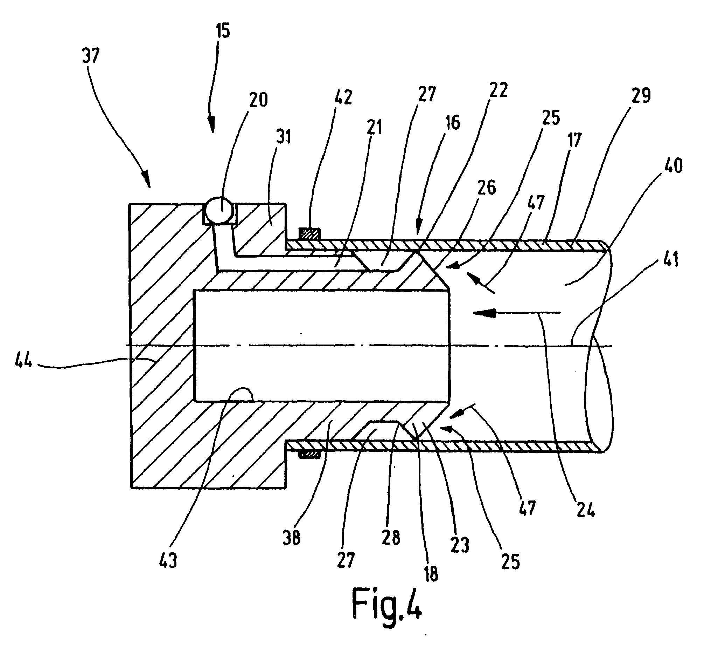

Unter Bezugnahme auf Figur 4 ist ein als Deckelelement 37 ausgebildeter Flüssigkeitsspender 15 dargestellt. Im Gegensatz zum Verbindungselement 36 gemäß Figur 2 und 3 weist das Deckelelement 37 keine Durchgangsöffnung 30 auf, sondern enthält eine die Zuführvorrichtung 13 endseitig begrenzende Stirnwand 44. Die Funktionsweise des als Deckelelement 37 ausgebildeten Flüssigkeitsspenders 15 entspricht derjenigen des als Verbindungselement 36 ausgebildeten Flüssigkeitsspenders 15, wobei sich die in Flussrichtung 24 im Innenraum 40 der Zuführleitung 17 strömende Flüssigkeit nicht in zwei Teilströme aufteilt, das heißt in einen zentralen Durchgangsstrom und einen ringförmigen Austrittsstrom, entsprechend der Funktionsweise eines Verbindungselements 36, sondern vollständig als Austrittsstrom zur Düse 20 gelangt.

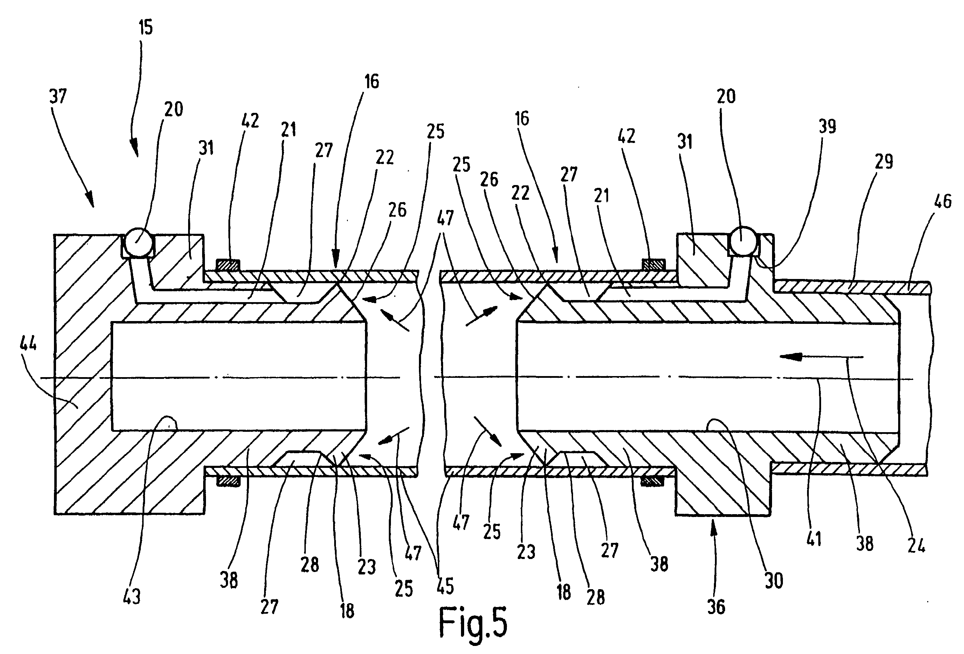

Figur 5 zeigt einen Längsschnitt einer alternativen Ausführungsform, gemäß welcher die Zuführleitung 17 (siehe auch Figur 1) eine elastisch verformbare Leitung 45 enthält, deren zwei Enden jeweils mit dem Dichtelement 18 der zwei hintereinander beabstandet angeordneten Flüssigkeitsspender 15, das heißt des Deckelelements 37 und des Verbindungselements 36, verbunden sind. Ferner weist die Zuführleitung 17 eine Verbindungsleitung 46 auf, die eine Pumpe 32 (siehe auch Figur 1) mit dem Anschlussstutzen 38 ohne Öffnungsmechanismus 16 des in Flussrichtung 24 ersten Flüssigkeitsspenders 15, in diesem Fall des Verbindungselements 36, verbindet. Ein bei aktivierter Pumpe 32 sich aufbauender Druck der Flüssigkeit in der elastisch verformbaren Leitung 45 führt -wie oben beschrieben- zu einer elastischen, in radialer Richtung sich ergebenden Erweiterung der Leitung 45 im Bereich des Dichtelements 18, insbesondere im Bereich der Dichtkante 22 unter Ausbildung einer Durchlassöffnung 19 (nicht in Figur 5 dargestellt), durch welche die unter Druck stehende Flüssigkeit entsprechend der jeweiligen Durchlassrichtung 47 fließt und zur Düse 20 des Verbindungselements 36 und des Deckelelements 37 gelangt. Gemäß dieser zweiten Ausführungsform werden möglichst viele Leitungsabschnitte erhalten, die ausschließlich mit Anschlussstutzen 38 ohne Öffnungsmechanismus 16 verbunden sind und somit nicht notwendigerweise aus einem verhältnismäßig teuren und spezielle Verformungseigenschaften aufweisenden Material hergestellt sein müssen. Dabei entspricht das Funktionsprinzip dieser zweiten Ausführungsform gemäß Figur 5 demjenigen gemäß den Figuren 2 und 3, wobei jedoch die Durchlassrichtung 47 des stromaufwärts angeordneten Verbindungselements 36 gemäß Figur 5 entgegengesetzt zur Flussrichtung 24 der Flüssigkeit steht.

Vorteilhafterweise sind sowohl das Verbindungselement 36 als auch das Deckelelement 37 als jeweils einteiliges, kompaktes und montagefreundliches Bauteil ausgebildet.

## Patentansprüche

1. Zuführvorrichtung (13) zur Zuführung einer Flüssigkeit auf ein Ziel, zum Beispiel eine Scheibe eines Fahrzeugs, mit einem auf Grund einer Flüssigkeitsdruckänderung schaltenden Öffnungsmechanismus (16) zur Abgabe der Flüssigkeit auf das Ziel, wobei der Öffnungsmechanismus (16) aus einer Leitung und einem innerhalb der Leitung angeordneten Dichtelement (18) besteht, **dadurch gekennzeichnet, dass** die Leitung eine Zuführleitung (17) der Zuführvorrichtung (13) ist und dass das Dichtelement (18) eine zwei voneinander getrennte Leitungsabschnitte (29) der Zuführleitung (17) verbindende Durchgangsöffnung (30) aufweist.

2. Zuführvorrichtung nach Anspruch 1, **dadurch gekennzeichnet, dass** die Schaltung des Öffnungsmechanismus (16) mittels einer elastischen Verformung der Zuführleitung (17) und/oder des Dichtelements (18) erfolgt.

3. Zuführvorrichtung nach einem der vorhergehenden Ansprüche, **dadurch gekennzeichnet, dass** bei einer Flüssigkeitsdruckerhöhung nach Erreichen eines Mindestdrucks der Flüssigkeit in der Zuführleitung (17) eine elastische, radiale Erweiterung der Zuführleitung (17) unter Ausbildung einer Durchlassöffnung (19) erfolgt.

4. Zuführvorrichtung nach einem der vorhergehenden Ansprüche, **dadurch gekennzeichnet, dass** sich die Durchlassöffnung (19) umfangsförmig zwischen dem Dichtelement (18) und der Zuführleitung (17) erstreckt.

5. Zuführvorrichtung nach einem der vorhergehenden Ansprüche, **dadurch gekennzeichnet, dass** das Dichtelement (18) einen sich von der Durchlassöffnung (19) zu einer Düse (20) erstreckenden Durchlasskanal (21) aufweist.

6. Zuführvorrichtung nach einem der vorhergehenden Ansprüche, **dadurch gekennzeichnet, dass** das Dichtelement (18) einen eine Dichtkante (22) aufweisenden, ringförmigen Vorsprung (23) enthält.

7. Zuführvorrichtung nach einem der vorhergehenden Ansprüche, **dadurch gekennzeichnet, dass** der Vorsprung (23) stirnseitig eine sich in Richtung der Durchlassöffnung (19) radial erweiternde und mit dem gegenüberliegenden Abschnitt der Zuführleitung (17) einen im Querschnitt keilförmigen Spalt (25) bildende Abschrägung (26) aufweist.

8. Zuführvorrichtung nach einem der vorhergehenden Ansprüche, **dadurch gekennzeichnet, dass** die Dichtkante (22) als im Querschnitt spitze Kante ausgebildet ist und das Dichtelement (18) in Durchlassrichtung (47) der Flüssigkeit durch die Durchlassöffnung (19) hinter der Dichtkante (22) eine zusammen mit dem gegenüberliegenden Abschnitt der Zuführleitung (17) einen Durchlasshohlraum (27) bildende, zum Durchlasskanal (21) führende Hinterschneidung (28) aufweist.

9. Zuführvorrichtung nach einem der vorhergehenden Ansprüche, **dadurch gekennzeichnet, dass** das Dichtelement (18) Teil eines einen Aufnahmekörper (31) aufweisenden Verbindungselements (36) ist.

10. Zuführvorrichtung nach einem der vorhergehenden Ansprüche, **dadurch gekennzeichnet, dass** der Aufnahmekörper (31) über die Zuführleitung (17) nach außen hinweg vorsteht und einen Aufnahmesitz (39) für eine Düse (20) zur Abgabe der Flüssigkeit auf die Scheibe (11) aufweist.

11. Zuführvorrichtung nach einem der vorhergehenden Ansprüche, **dadurch gekennzeichnet, dass** das Verbindungselement (36) aus einem in Bezug auf das Material der Zuführleitung (17) biegesteiferen Material hergestellt ist.

12. Zuführvorrichtung nach einem der vorhergehenden Ansprüche, **dadurch gekennzeichnet, dass** die Zuführvorrichtung (13) mit einer der Scheibe (11) des Fahrzeugs zugeordneten Wischvorrichtung (10) verbunden ist.

13. Zuführvorrichtung nach einem der vorhergehenden Ansprüche, **dadurch gekennzeichnet, dass** die Zuführleitung (17) mittels eines ringförmigen Klemmelements (42) verschiebungssicher auf einem Anschlußstutzen (38) des Dichtelements (18) befestigt ist.

14. Zuführvorrichtung nach einem der vorhergehenden Ansprüche, **dadurch gekennzeichnet, dass** die Zuführleitung (17) wenigstens eine elastisch verformbare Leitung (45), deren Enden jeweils mit dem Dichtelement (18) von zwei hintereinander beabstandet angeordneten Flüssigkeitsspendern (15) verbunden sind, und eine Verbindungsleitung (46) enthält, die eine Pumpe (32) mit einem Anschlussstutzen (38) ohne Öffnungsmechanismus (16) eines in Flussrichtung (24) ersten Flüssigkeitsspenders (15) verbindet.

## Claims

1. Feed device (13) for feeding a liquid to a destination, for example, to a window of a motor vehicle, with an opening mechanism (16), which switches on the basis of a change in the pressure of the liquid, for dispensing the liquid to the destination, the opening mechanism (16) comprising a line and a sealing element (18) arranged within the line, **characterized in that** the line is a feed line (17) of the feed device (13), and **in that** the sealing element (18) has a through opening (30) connecting two line sections (29) of the feed line (17) that are separated from each other.

2. Feed device according to Claim 1, **characterized in that** the switching of the opening mechanism (16) takes place by means of elastic deformation of the feed line (17) and/or the sealing element (18).

3. Feed device according to one of the preceding claims, **characterized in that**, in the case of an increase in the pressure of the liquid, after a minimum pressure of the liquid in the feed line (17) is reached, an elastic, radial expansion of the feed line (17) takes place with the formation of a passage opening (19).

4. Feed device according to one of the preceding claims, **characterized in that** the passage opening (19) extends circumferentially between the sealing element (18) and the feed line (17).

5. Feed device according to one of the preceding claims, **characterized in that** the sealing element (18) has a passage channel (21) extending from the passage opening (19) to a nozzle (20).

6. Feed device according to one of the preceding claims, **characterized in that** the sealing element (18) contains an annular projection (23) having a sealing edge (22).

7. Feed device according to one of the preceding claims, **characterized in that** the projection (23) has, on the end side, a bevel (26) which widens radially in the direction of the passage opening (19) and, with the opposite section of the feed line (17), forms a gap (25) which is wedge-shaped in cross section.

8. Feed device according to one of the preceding claims, **characterized in that** the sealing edge (22) is designed as a sharp edge in cross section and the sealing element (18) has, in the passage direction (47) of the liquid through the passage opening (19) behind the sealing edge (22), an undercut (28) which, together with the opposite section of the feed line (17), forms a passage cavity (27) and leads to the passage channel (21).

9. Feed device according to one of the preceding claims, **characterized in that** the sealing element (18) connects a part of a connecting element (36) having a receiving body (31).

10. Feed device according to one of the preceding claims, **characterized in that** the receiving body (31) protrudes outwards beyond the feed line (17) and has a receiving seat (39) for a nozzle (20) for dispensing the liquid to the window (11).

11. Feed device according to one of the preceding claims, **characterized in that** the connecting element (36) is produced from a material which is more flexurally rigid than the material of the feed line (17).

12. Feed device according to one of the preceding claims, **characterized in that** the feed device (13) is connected to a wiper device (10) assigned to the window (11) of the motor vehicle.

13. Feed device according to one of the preceding claims, **characterized in that** the feed line (17) is fastened in a manner secure against displacement on a connecting piece (38) of the sealing element (18) by means of an annular clamping element (42).

14. Feed device according to one of the preceding claims, **characterized in that** the feed line (17) contains at least one elastically deformable line (45), the ends of which are in each case connected to the sealing element (18) of two liquid dispensers (15) arranged spaced apart one behind the other, and contains a connecting line (46) which connects a pump (32) to a connecting piece (38) without opening mechanism (16) of a liquid dispenser (15) which is first in the flow direction (24).

## Revendications

1. Dispositif d'alimentation (13) pour l'amenée d'un liquide à une destination, par exemple une vitre d'un véhicule, avec un mécanisme d'ouverture (16) s'enclenchant sur la base d'une variation de pression du liquide pour la fourniture de liquide à la destination, dans lequel le mécanisme d'ouverture (16) se compose d'une conduite et d'un élément d'étanchéité (18) disposé à l'intérieur de la conduite,
**caractérisé en ce que**
la conduite est une conduite d'amenée (17) du dispositif d'alimentation (13) et l'élément d'étanchéité (18) présente une ouverture de passage (30) reliant deux parties de conduite (29) de la conduite d'amenée (17) séparées l'une de l'autre.

2. Dispositif d'alimentation selon la revendication 1,
**caractérisé en ce que**
l'enclenchement du mécanisme d'ouverture (16) est effectué au moyen d'une déformation élastique de la conduite d'amenée (17) et/ou de l'élément d'étanchéité (18).

3. Dispositif d'alimentation selon l'une quelconque des revendications précédentes,
**caractérisé en ce qu'**
il se produit un élargissement radial élastique de la conduite d'amenée (17) avec formation d'une ouverture de passage (19) lors d'une augmentation de la pression du liquide après avoir atteint une pression minimale du liquide dans la conduite d'amenée (17).

4. Dispositif d'alimentation selon l'une quelconque des revendications précédentes,
**caractérisé en ce que**
l'ouverture de passage (19) s'étend sous forme périphérique entre l'élément d'étanchéité (18) et la conduite d'amenée (17).

5. Dispositif d'alimentation selon l'une quelconque des revendications précédentes,
**caractérisé en ce que**
l'élément d'étanchéité (18) comporte un canal de passage (21) s'étendant depuis l'ouverture de passage (19) jusqu'à une buse (20).

6. Dispositif d'alimentation selon l'une quelconque des revendications précédentes,
**caractérisé en ce que**
l'élément d'étanchéité (18) comporte une saillie annulaire (23) présentant une arête d'étanchéité (22).

7. Dispositif d'alimentation selon l'une quelconque des revendications précédentes,
**caractérisé en ce que**
la saillie (23) présente du côté frontal un chanfrein (26) s'évasant radialement en direction de l'ouverture de passage (19) et formant une fente (25) ayant une section transversale en forme de coin avec la partie opposée de la conduite d'amenée (17).

8. Dispositif d'alimentation selon l'une quelconque des revendications précédentes,
**caractérisé en ce que**
l'arête d'étanchéité (22) est réalisée sous la forme d'une arête vive en section transversale et l'élément d'étanchéité (18) présente, derière l'arête d'étanchéité (22) dans la direction de passage (47) du liquide à travers l'ouverture de passage (19), une contre-dépouille (28) conduisant au canal de passage (21) et formant avec la partie opposée de la conduite d'amenée (17) une chambre de passage creuse (27).

9. Dispositif d'alimentation selon l'une quelconque des revendications précédentes,
**caractérisé en ce que**
l'élément d'étanchéité (18) fait partie d'un élément de liaison (36) comportant un corps de réception (31).

10. Dispositif d'alimentation selon l'une quelconque des revendications précédentes,
**caractérisé en ce que**
le corps de réception (31) est saillant vers l'extérieur au-delà de la conduite d'amenée (17) et présente un siège de réception (39) pour une buse (20) destinée à fournir le liquide sur la vitre (11).

11. Dispositif d'alimentation selon l'une quelconque des revendications précédentes,
**caractérisé en ce que**
l'élément de liaison (36) est fabriqué en une matière plus rigide en flexion que la matière de la conduite d'amenée (17).

12. Dispositif d'alimentation selon l'une quelconque des revendications précédentes,
**caractérisé en ce que**
le dispositif d'alimentation (13) est raccordé à un dispositif d'essuie-glace (10) associé à la vitre (11) du véhicule.

13. Dispositif d'alimentation selon l'une quelconque des revendications précédentes,
**caractérisé en ce que**
la conduite d'amenée (17) est fixée sur un embout de raccordement (38) de l'élément d'étanchéité (18), au moyen d'un élément de serrage annulaire (42) empêchant tout déplacement.

14. Dispositif d'alimentation selon l'une quelconque des revendications précédentes,
**caractérisé en ce que**
la conduite d'amenée (17) comprend au moins une conduite déformable élastiquement (45), dont les extrémités sont raccordées respectivement à l'élément d'étanchéité (18) de deux distributeurs de liquide (15) écartés l'un derrière l'autre, et une conduite de raccordement (46) qui relie une pompe (32) à un embout de raccordement (38) sans mécanisme d'ouverture (16) d'un premier distributeur de liquide (15) dans la direction d'écoulement (24).
